# EUROPEAN PATENT APPLICATION

(11) **EP 1 908 969 A1**
(43) Date of publication of application: **09.04.2008**
(21) Application number: 06781036.6
(22) Date of filing: 06.07.2006
(51) Int. Cl.: F16C 11/10, F16C 11/04

(54) **HINGE DEVICE**

(30) Priority: 08.07.2005 JP 2005199962
(71) Applicant: CITIZEN HOLDINGS CO., LTD., Nishitokyo-shi, Tokyo 188-8511 (JP)
(72) Inventor: NAKAYAMA, Yasuaki, Saitama 357-0045 (JP); Ikai, Katsuhiko c/o Citizen Watch Co., Ltd.,, Nishitokyo-shi, Tokyo 1885511 (JP)
(74) Representative: Feldmeier, Jürgen
(86) International application number: PCT/JP2006/313916
(87) International publication number: WO 2007/007817

(57) **Abstract**

A case (10), a coil spring (60), a sliding disc (20) and a rotational disc (30) are contained, and the following construction is equipped. The case (10) has a positioning recess portion (13) on the inner wall thereof. On the peripheral surface of the sliding disc (20) is provided a projecting portion (24) which is engaged with the positioning recess portion (13) of the case (10) to suppress the rotation thereof with respect to the case (10). One end face of the sliding disc (20) and one end face of the rotational disc (30) are confronted to each other, and cam portions (23), (33) which are engaged with or separated from each other in connection with the rotation of the rotational disc (30) are formed on both the confronting end faces. The cam portion (23) formed on the sliding disc (20) projects to the outside of the outer peripheral surface of the sliding disc (20).

## Description

### Technical Field

The present invention relates to a hinge device which is used in a device having a folding portion such as a flip phone (folding type cellular phone),a notebook-sized personalcomputer or the like and through which a main body and a rotational member are rotatably linked to each other.

### Background Art

A miniaturized hinge device has been hitherto frequently applied to a device having a folding portion such as a flip phone (folding type cellular phone), a notebook-sized personal computer or the like. Japanese Utility Model Registration No. 3102440, Japanese Patent No. 3471743, JP-A-2002-227825, JP-A-2005-36904, etc. have disclosed such hinge devices.

The hinge device disclosed in each of the above publications has the following construction. In the following description, reference numerals in parentheses correspond to reference numerals drawn in the figures of the above publications.

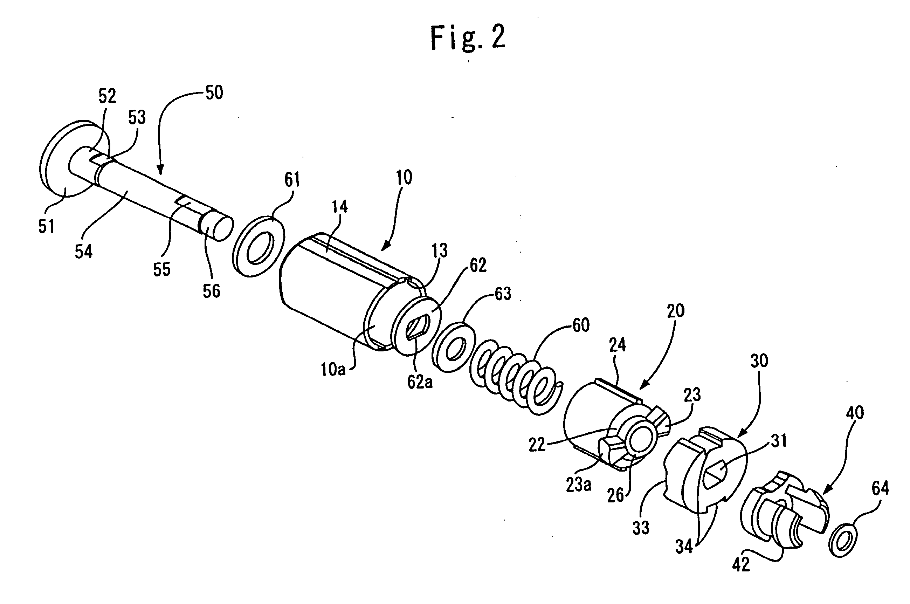

With respect to the hinge device disclosed in Japanese Utility Model Registration No. 3102440, two or more positioning recess grooves (113) are formed on the inner wall surface of a sleeve (11), positioning projecting portions (121) are formed on restricting means (12), and the positioning projecting portion (121) is engaged with the positioning recess portions (113). This hinge device is designed so that a rotational torque which is transmitted to the restricting means (12) in connection with rotation of rotating means (13) is received between the positioning projecting portions (121) formed on the restricting means (12) and the inner walls of the positioning recess grooves (113) formed on the sleeve (11) (see Fig. 2 of the same publication).

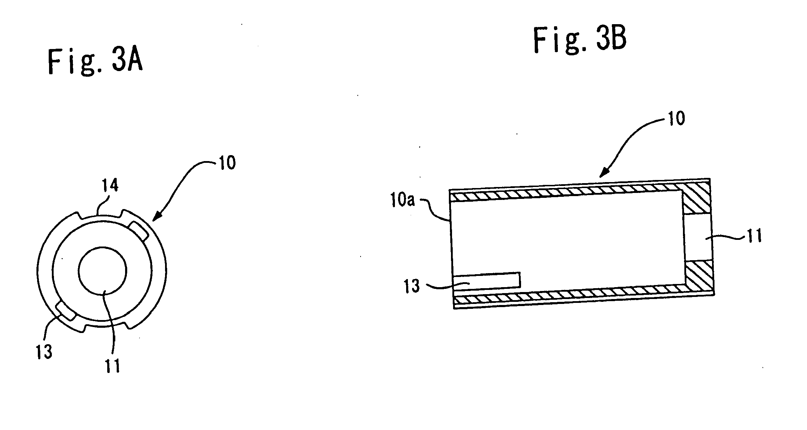

With respect to the hinge device disclosed in Japanese Patent No. 3471743, radially projecting portions of an engaging member (c) are engaged with slide incision grooves (12d) formed on a cylindrical main body (12A), and a rotational torque which is transmitted to the engaging member (c) in connection with rotation of a second disc (13) is received by the inner edge portions of the slide incision grooves (12d) (see Fig. 3 of the same publication).

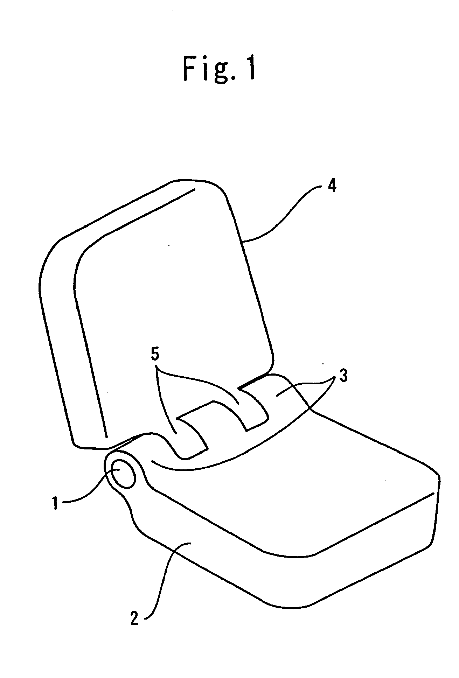

With respect to the hinge device disclosed in JP-A-2002-227825, projecting portions (8c) of a spacer (8) are engaged with engaging groves (4d) formed on a case member (4), and a rotational torque which is transmitted to the spacer (8) in connection with rotation of a cylindrical member (2a) at the movable side is received by the inner edge portions of the engaging grooves (4d) (see Fig. 1 of the same publication).

With respect to the hinge device disclosed in JP-A-2005-36904, corner portions (3d) of a fixing cam (3) are engaged with groove portions (1a) formed on a cylinder (1), and a rotational torque which is transmitted to the fixing cam (3) in connection with rotation of a movable cam (4) is received by the inner edge portions of the groove portions (1a) (see Fig. 2 of the same publication).

In the hinge device disclosed in Japanese Patent No. 3471743, the slide incision grooves (12d) are formed in the cylindrical main body (12A), and the rotational torque is received by the inner edge portions of the slide incision grooves (12d).

In the case of the above structure, stress concentration occurs at the inner edge portions of the slide incision grooves (12d) by the rotational torque which repetitively acts on the inner edge portions in connection with the rotational operation of the hinge device, so that the durability is lowered and finally the cylindrical main body (12A) may be damaged.

This problem may also occur in the hinge devices disclosed in JP-A-2002-227825 and JP-A-2005-36904.

On the other hand, in the Utility Model Registration No. 3102440, the rotational torque is received between the positioning projecting portion and the inner wall of the positioning recess groove (113) formed on the sleeve (11), and thus the rotational torque is not received by the incision groove as disclosed in Patent publications 2 to 4, and thus there is no risk that stress concentrates to the sleeve.

Furthermore, in the hinge device of the patent publication 1, an arcuate rotational projecting portion (132) and a recess groove (133) formed on the end face of the rotating means (13) are engaged with the positioning recess portion (123) and the proj ecting portion (122) formed on the end face of the restricting means (12), and the urging force of a compression spring (14) acts on the respective contact faces to restrict the free rotation of the rotating means (13).

When the rotating means (13) is rotated against the urging force of the compression spring (14), the friction force based on the rotational torque acts on the contact faces between the arcuate rotational projecting portion (132), the recess groove (133) and the positioning recess portion (123), the projecting portion (122).

Here, the outer diameter of the restricting means (12) disclosed in the patent publication 1 is set so that the restricting means (12) is engagedly fitted in the sleeve (11), and the positioning recess portion (123) and the projecting portion (122) formed on the end face thereof are formed to have the same outer diameter dimension as the sleeve (11).

Accordingly, the rotational torque transmitted from the rotatingmeans (13) acts as large friction force on the positioning recess portion (123) and the projecting portion (122) each of which has a shorter outer diameter, so that the end face of the restricting means (12) may be worn away early by the repetitive rotating operation.

### Disclosure of the Invention

The present invention has been implemented in view of the foregoing situation, and has an object to provide a hinge device in which the durability of a case and a sliding disc to the rotational torque occurring in connection with a rotating operation can be more remarkably enhanced.

In order to attain the above object, the present invention is characterized by having the following construction in a hinge device containing a case, a coil spring, a sliding disc and a rotational disc:
(a) the case has a positioning recess portion or a projecting portion on the inner wall thereof;
(b) the coil spring is engagedly fitted in the case;
(c) the peripheral surface shape of the sliding disc is set so that the sliding disc can be engagedly fitted to the inner wall of the case, and the sliding disc is urged by the coil spring so as to be slidable along an axial line direction in the case;
(d) The peripheral surface of the sliding disc is provided with a projecting portion or recess portion that is engagedly fitted in the positioning recess portion or the projecting portion formed on the inner wall of the case to suppress the rotation thereof with respect to the case;
(e) The rotational disc is rotatable with respect to the sliding disc and the case;
(f) the sliding disc and the rotational disc are respectively provided with cam portions which are fitted to or separated from each other in connection with the rotation of the rotational disc;
(g) The cam portion formed on the sliding disc is formed so as to project to the outside of the outer peripheral surface of the sliding disc; and
(h) The cam portion formed on the rotational disc has a radial length corresponding to the cam portion formed on the sliding disc.

According to the invention having the above construction, the regulation of the rotation (positioning) of the sliding disc in connection with the rotational operation of the rotational disc is carried out between the positioning recess portion or projecting portion formed on the inner wall of the case and the positioning projecting portion or recess portion formed on the peripheral surface of the sliding disc. Furthermore, the cam portion formed on the sliding disc is formed so as to project to the outside of the outer peripheral surface of the sliding disc, whereby the rotational torque occurring at the cam portion in connection with the rotational operation of the rotational disc can be increased as much as possible.

Furthermore, in order to attain the above object, the present invention is characterized by the following construction in a hinge device containing a case, a friction plate, a coil spring, a sliding disc, a rotational disc and a shaft member penetrating through the above elements:
(a) the case is designed in a cylindrical shape having a bottom and has a positioning recess portion or a projecting portion on the inner wall thereof, and a through hole is provided in the bottom of the case so that the shaft member is rotatably inserted through the through hole;
(b) The friction plate is fixed to the shaft member so as to interlock with the rotation of the shaft member, and also disposed so as to come into contact with the bottom surface in the case so that friction occurs between the friction plate and the bottom surface in the case in connection with the rotation of the shaft member;
(c) the coil spring is engagedly fitted in the case and presses the friction plate so that the friction plate is brought into contact with the bottom surface inside the case under pressure;
(d) the sliding disc is provided with an insertion hole substantially at the center position thereof so that the shaft member is rotatably inserted through the insertion hole, has a peripheral surface shape so that the sliding disc is engagedly fitted to the inner wall of the case, and is urged by the coil spring so that the sliding disc is slidable along an axial line direction in the case;
(e) the peripheral surface of the sliding disc is provided with a projecting portion or recess portion that is engaged with the positioning recess portion or projecting portion formed on the inner wall of the case to suppress the rotation thereof with respect to the case;
(f) the rotational disc is fixed to the shaft member so as to interlock with the rotation of the shaftmember, and rotatable with respect to the sliding disc and the case;
(g) the sliding disc and the rotational disc are respectively provided with cam portions that are fitted to or separated from each other in connection with the rotation of the rotational disc;
(h) the cam portion formed on the sliding disc is formed so as to project to the outside of the outer peripheral surface of the sliding disc; and
(i) the cam portion formed on the rotational disc has a radial length corresponding to the cam portion formed on the sliding disc.

According to the construction described above, friction torque occurs between the friction plate and the bottom surface inside the case in connection with the rotation of the shaft member. Accordingly, even when materials of the sliding disc and the rotational disc are selected and subjected to a surface treatment to make smooth between the sliding disc and the rotational disc so that the abrasion between the sliding disc and the rotational disc is suppressed, sufficient friction torque can be obtained between the friction plate and the bottom surface inside the case, and a free stop function of stopping at a desired position can be implemented.

Furthermore, a flange portion is formed at one end of the case bottom surface side, and a plastic washer interlocking with the rotation of the shaft member is inserted between the flange portion and the case bottom surface. Therefore, the friction torque occurring between the flange portion and the case bottom surface can be escaped through the plastic washer, and thus the friction between the flange portion and the case bottom surface can be reduced.

Still furthermore, the cam portion of the sliding disc is a tapered projecting cam formed on a confronting end face of the sliding disc which faces the rotational disc, and a ring-shaped portion having the same height as the projecting cam is provided at the peripheral edge of the confronting end face side of the insertion hole of the sliding disc. The ring-shaped portion can increase the guide length of the insertion hole through which the sliding disc is slid in the axial direction of the shaft member, so that the sliding operation of the sliding disc which may be tilted by strong spring force can be executed smoothly.

Here, if the case is provided with a clearance groove cut out along the axial line direction from the side end edge thereof, and a portion of the cam portion formed on the sliding disc which projects to the outside of the outer peripheral surface of the sliding disc is allowed to intrude into the clearance groove, the dimension in the axial direction of the sliding disc can be shortened, and thus the device can be miniaturized.

Furthermore, if the cam portion of the sliding disc is formed on the confronting end face of the sliding disc which faces the rotational disc and the inner wall of the case and the outer peripheral surface of the sliding disc facing the inner wall are engagedly fitted to each other in frictional contact with each other, the rotational torque transmitted from the rotational disc can be also received between the inner wall of the case and the outer peripheral surface of the sliding disc, so that the load of the rotational torque on the positioning recess portion or projecting portion formed on the inner wall of the case and the positioning projecting portion or recess portion formed on the peripheral surface of the sliding disc can be reduced.

As described above, according to the present invention, the durability of the case and the sliding disc to the rotational torque occurring in connection with the rotational operation can be dramatically enhanced.

### Brief Description of the Drawings

Fig. 1 is a perspective view showing the overall construction of a folding device to which a hinge device is applied;
Fig. 2 is an exploded perspective view showing the overall construction of a hinge device according to a first embodiment;
Figs. 3A to 3B are diagrams showing the construction of the case of the hinge device according to the first embodiment;
Figs. 4A to 4C are diagrams showing the construction of a sliding disc of the hinge device according to the first embodiment;
Figs. 5A to 5C are diagrams showing the construction of a rotational disc of the hinge device according to the first embodiment;
Figs. 6A to 6C are diagrams showing the construction of a hookmember of the hinge device according to the first embodiment;
Figs. 7A and 7B are diagrams showing the construction of a shaft member of the hinge device according to the first embodiment;
Figs. 8A and 8B are diagrams showing the overall construction of the hinge device according to the first embodiment;
Figs. 9A and 9B are perspective view when the hinge device according to the first embodiment is applied to a folding device;
Fig. 10 is an enlarged side view showing the state of the sliding disc and the rotational disc before the hinge device according to the first embodiment is rotated;
Fig. 11 is an enlarged side view showing the state of the sliding disc and the rotational disc during the rotation of the hinge device according to the first embodiment;
Fig. 12 is an exploded perspective view showing the overall construction of a hinge device according to a second embodiment;
Figs. 13A and 13B are diagrams showing the construction of the hinge device according to the second device;
Figs. 14A to 14C are diagrams showing the construction of the sliding disc of the hinge device according to the second embodiment;
Figs. 15A and 15B are diagrams showing the overall construction of the hinge device according to the second embodiment;
Fig. 16 is an enlarged side view showing the state of the sliding disc and the rotational disc before the rotation of the hinge device according to the second embodiment; and
Fig. 17 is an enlarged side view showing the state of the sliding disc and the rotational disc during the rotation of the hinge device according to the second embodiment.

### Best mode for carrying out the Invention

Embodiments of the present invention will be described in detail with reference to the drawings.

### [First Embodiment]

Figs. 1 to 11 are diagrams showing a hinge device according to a first embodiment of the present invention, Fig. 1 is a perspective view showing the overall construction of a folding device to which a hinge device is applied, and Fig. 2 is an exploded perspective view showing the overall construction of the hinge device.

As shown in Fig. 1, a device having a folding portion such as a flip phone or the like is constructed by a main body 2 and a cover 4. the main body 2 is provided with an insertion portion 3 at one side edge portion so that a hinge device 1 is inserted in the insertion portion 3. Furthermore, the cover 4 is also provided with an insertion portion 5 at one side edge portion so that the insertion portion 5 is engaged with the insertion portion 3 of the main body 2. The hinge device 1 inserted in the insertion portion 3 of the main body 2 is also partially inserted in the insertion portion 5 at the cover 4 side, whereby both the main body 2 and the cover 4 are freely rotatably linked to each other.

As shown in Fig. 2, the hinge device 1 according to this embodiment comprises a case 10, a sliding disc 20, a rotational disc 30, a hook member 40 and a shaft member 50 which is inserted through the above elements coaxially and around which the above elements are mounted.

As shown in Figs. 2, 3A and 3B, the case 10 is a cylindrical member having a bottom and it is provided with a circular insertion hole 11 on the center line of the base end face thereof, through which the shaft member 50 is inserted. A coil spring 60 having any elastic force, etc. are inserted in the cylinder of the case 10.

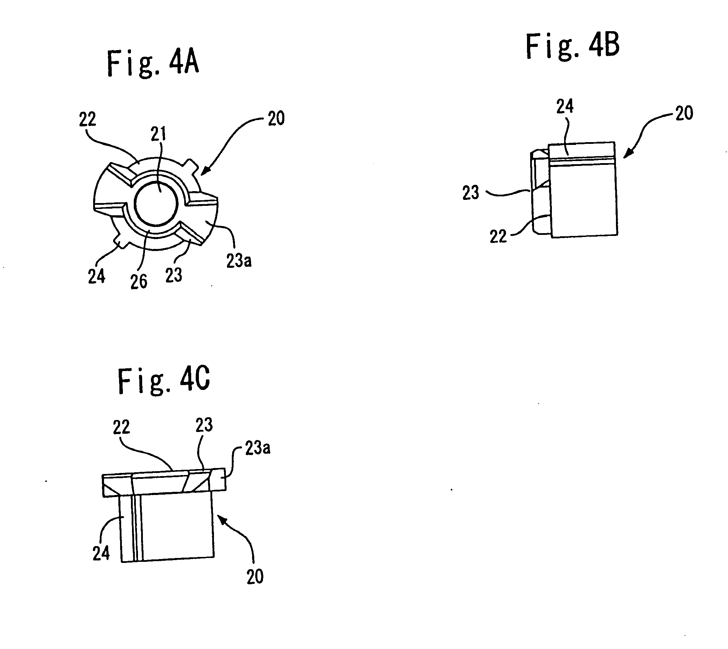

As shown in Figs. 2, 4A, 4B, and 4C, the sliding disc 20 is a member having a cylindrical shape which is inserted in an opening portion 10a of the case 10 so as to be freely slidable. A circular insertion hole 21 through which the shaft member 50 is inserted is provided on the center axis of the sliding disc 20. Furthermore, a tapered projecting cam portion 23 is provided to an end face of the sliding disc 20 in the opposite side to the case 10 (hereinafter referred to as first confronting end face 22) so as to project from the end face.

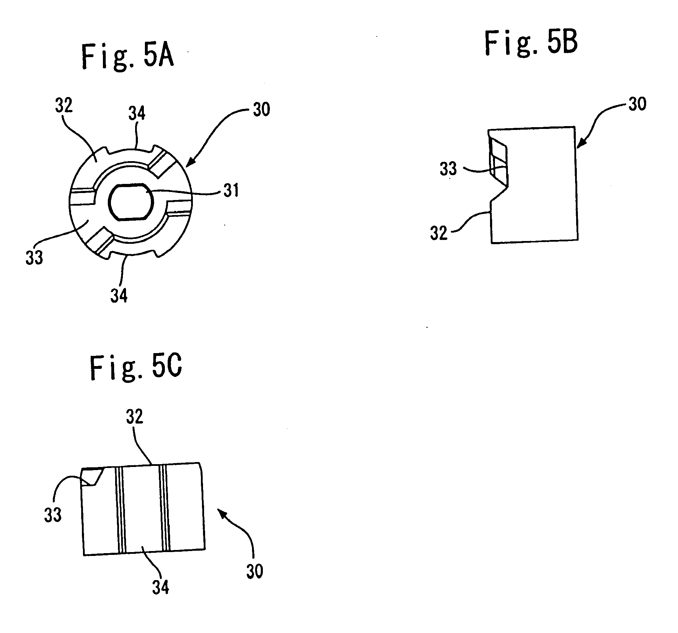

As shown in Figs. 2, 5A, 5B, and 5C, the rotational disc 30 has a second confronting end face 32 which comes into contact with the first confronting end face 22 of the sliding disc 20. The rotational disc 30 is a member having a cylindrical shape and provided with a rectangular insertion hole 31 on the center axis through which the shaft member 50 is inserted. A recess cam portion 33 which is engaged with the projecting cam portions 23 of the sliding disc 20 is provided on the second confronting end face 32 of the rotational disc 30.

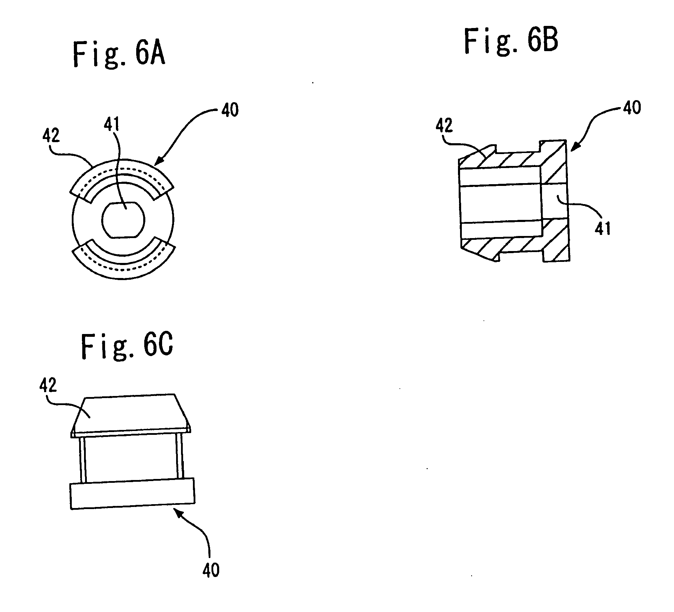

As shown in Figs. 2, 6A, 6B and 6C, the hook member 40 is provided with a rectangular insertion hole 41 on the center axis through which the shaft member 50 is inserted.

These members of the hinge device 1 are designed so that the shaft member 50 penetrates through the respective insertion holes thereof on the center axis.

Furthermore, each specific construction will be described. As shown in Figs. 2, 3A and 3B, positioning recess portions 13 are engraved along the axial direction on the cylinder inner peripheral surface of the case 10 of the hinge device 10 so as to extend from the opening portion 10a to a predetermined position. Furthermore, groove portions 14 extending along the axial direction are provided on the outer peripheral surface of the case 10. The positioning recess portions 13 and the groove portions 14 are disposed so as to be displaced from each other so that the thickness of the case 10 is not extremely reduced.

As shown in Figs. 2, 4A, 4B, 4C, theprojectingcamportions 23 of the sliding disc 20 extend radially from the center axial position so as to be symmetrical in the right-and-left direction, and the end portions thereof project from the side peripheral surface of the sliding disc 20. This is because the rotational torque occurring in connection with the rotation of the rotational disc 30 can be increased at maximum. When this engagement state is released by rotating the rotational disc 30 from the state that the projecting cam portions 23 are engaged with the tapered recess cam portion 33 of the rotational disc 30, the urging force of the coil spring 60 acts on the tapered faces corresponding to the contact faces of the recess camportion 33 and the projecting cam portions 23, and thus rotational torque occurs in the opposite direction to the rotational direction of the rotational disc 30. By applying this drag to the rotational torque to the rotational disc 30, the engagement between the projecting cam portions 23 and the recess cam portion 33 is released in the hinge device.

Conversely, when the rotational disc 30 is rotated from the state that the engagement between the projecting cam portions 23 and the recess cam portion 33 is released so that the projecting cam portions 23 and the recess cam portion 33 are set to be engaged with each other, and thus the tapered surfaces of the projecting cam portions 23 are brought into contact with the tapered surfaces of the recess cam portion 33, a rotational torque is generated by the urging force of the coil spring 60 so that the projecting cam portions 23 and the recess cam portion 33 are engaged with each other. That is, these rotational torques act so that the projecting cam portions 23 and the recess cam portion 33 are engaged with each other.

With respect to a cellular phone in which the main body and the cover can be opened/closed, by using the rotational torque of the hinge device 1 as described above, force acts so as to prevent easy opening of the cover, but force acts so as to naturally open the cover immediately before the cover is completely opened. However, such an effect is not expectable unless the rotational torque is large to some degree. Therefore, the rotational torque is increased by increasing the rotational radius corresponding to the contact portion between the projecting cam portion 23 and the recess cam portion 33 together with the urging force of the coil spring 60.

Furthermore, positioning projecting portions 24 like a bulge are provided on the side peripheral surface of the sliding disc 20. The positioning projecting portions 24 are fitted in the positioning recess portions 13 when the sliding disc 20 is inserted into the case 10, thereby regulating the rotation of the sliding disc 20. The positioning projecting portions 24 are freely slidable along the positioning recess portions 13.

Furthermore, the sliding disc 20 is provided with a ring-shaped portion having the same height as the projecting cam portions 23 at the peripheral edge of the first confronting end face 22 side of the insertion hole 21. The reason for this is as follows. That is, in the molding process of the sliding disc 20, burning is carried out after powder molding. When the projecting cam portion 23 face is placed face up, the projecting portions 23a on the outer periphery of the projecting cam portions 23 slightly hang down by gravitational force. In this case, the recess cam portion 33 is brought into contact with the inner peripheral side of the projecting cam portion 23 and thus the sliding radius is reduced, so that the rotational torque is lowered.

Accordingly, it is preferable that burning is carried out while the projecting cam portion 23 face is placed face down. However, when the area of the top surface of the projecting cam portion 23 is small, it cannot support the sliding disc 20.

Therefore, the ring-shaped portion 26 having the same height which does not contribute to the torque is provided at the inner peripheral portion, whereby the weight of the sliding disc 20 can be supported even when burning is carried out under the state that the projecting cam portion 23 face is placed face down. It is very difficult to form the ring-shaped portion 26 in the press working, but it is easy to form the ring-shaped portion in the power molding. Furthermore, the guide length of the insertion hole 21 is increased by the ring-shaped portion 26, and this brings an effect that the sliding operation of the sliding disc which may be tilted by strong spring force when the sliding disc 20 is slid in the axial direction of the shaft member 50 can be smoothly executed.

With respect to the molding of the rotational disc 30, the area of the recess cam portion 33 is set to be large, and thus even when the recess cam portion 33 face is placed face up or face down, it does not hang down because it has the same planar shape.

As shown in Figs. 2, 5A, 5B and 5C, the recess cam portion 33 of the rotational disc 30 is designed to have a tapered shaped having the same tile angle as the projecting cam portion 23, and when they are engaged with each other, they can be fitted to each other by fixed friction force. Furthermore, the rotational disc 30 is fixed not to be rotated with respect to the cover 4, and thus groove portions 34 are provided along the axial direction on the outer peripheral surface.

Furthermore, as shown in Figs. 2, 6A, 6B and 6c, the hook member 40 is provided with a pair of claw-shaped hooks 42, and it can be fixed by hooking the hooks 42 into the insertion portion 5 provided to the cover 4 of the folding device. The hook member 40 is not limited to the shape as shown in Figs. 6A, 6B, 6c, and various modifications may be adopted.

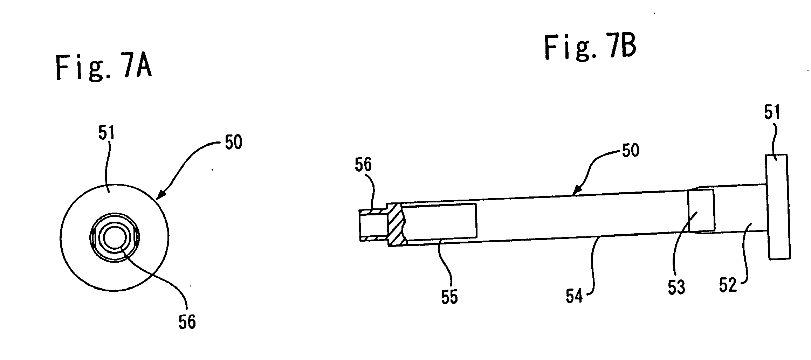

As shown in Figs. 2, 7A, and 7B, the shaft member 50 comprises a flange portion 51, a first round bar portion 52, a first fixing portion 53, a second round bar portion 54, a second fixing portion 55 and a narrow tip portion 56 which are formed in this order from the base end side. The flange portion 51 of the shaft member 50 has such a diameter that it can be fitted to the base end face of the case 10. The first round bar portion 52 is a site which is designed to have a circular cross section, and extends from the center position of the flange portion 51. The first round bar portion 52 is freely rotatably fitted in the circular insertion hole 11 of the case 10 when it is inserted in the case 10. The first fixing portion 53 is a site which is subsequent to the first round bar portion 52 and designed to have an oval-shaped cross section. A friction plate 62 as described later is engagedly fitted around the first fixing portion 53.

The second round bar portion 54 is a site formed in a rod-shape having a circular cross section, and the coil spring 60, the circular insertion hole 21 of the sliding disc 20, etc. are engagedly fitted around the second round bar portion 54. The second fixing portion 55 is a site which is formed in a rod-shape having an oval-shaped cross section, and the rectangular insertion holes 31 and 41 of the rotational disc 30 and the hook member 40 are engagedly fitted around the second fixing portion 55. The narrow tip portion 56 serves to prevent dropout of the respective members in the assembly process of the hinge device 1 by caulking this site.

The sliding disc 20 and the rotational disc 30 out of the respective members are formed of zirconia type ceramic material of 97 mol% of zirconia and 3 mol% of yttrium oxide, the Vickers hardness thereof is equal to HV1200 to HV1500, the surface roughness of the projecting camportion 23 of the first confronting end face 22 and the second confronting end face 32 is set to 0.03 to 0.1µm, and the coefficient of friction is set in the range from 0.04 to 0.1. Furthermore, the diameter of the first confronting end face 22 and the second confronting end face 32 is set to 3mm. The sliding disc 20 and the rotational disc 30 are obtained by executing the injection molding based on CIM, burning after defatting and then executing barrel-polishing according to a normal method, and lubricating agent is coated on the projecting cam portion 23 of the first confronting end face 22 and the second confronting end face 32. The other members are formed of SUS and plastic materials.

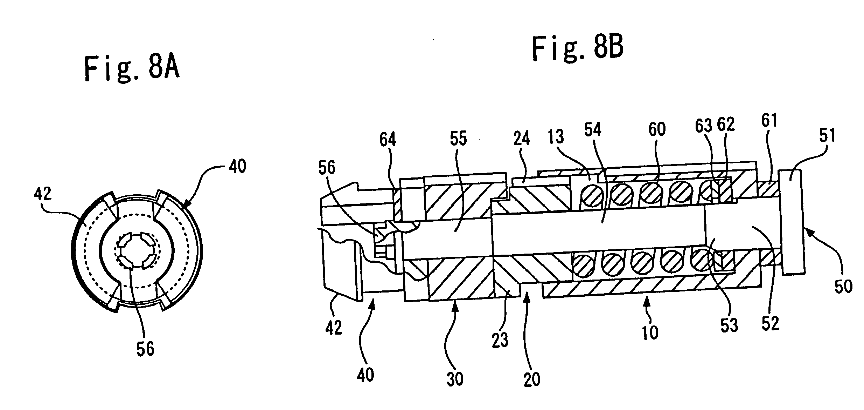

Fig. 8A is a front view showing the overall construction of the hinge device, and Fig. 8B is a side cross-sectional view showing the overall construction of the hinge device.

Next, the detailed structure of the hinge device 1 according to the first embodiment and the method of assembling the respective constituent elements will be described mainly with reference to Figs. 2, 8A and 8B.

In the hinge device 1, the shaft member 50 is inserted in the circular insertion hole 11 of the case 10 through the plastic washer 61 having plasticity. The shaft member 50 is inserted until the plastic washer 61 and the base end portion of the case 10 abut against the flange portion 51, whereby the respective sites of the shaft member 50 and the respective members mounted on the shaft member 50 can be positioned. Under the state that the case 10 abuts against the flange portion, the plastic washer 61 and the base end portion of the case 10 are first engagedly fitted around the first round bar portion 52 of the shaft member 50.

The plastic washer 61 is formed of a self-lubricating flexible plastic material which is not required to be oiled, and it is inserted between the base end portion of the case 10 and the flange portion 51 of the shaft member 50 in order to avoid the abrasion caused by the direct contact between the base end portion of the case 10 and the flange portion 51 of the shaft member 50. When the hinge device 1 is opened/closed, the shaft member 50 is rotated with respect to the case 10, and thus if no plastic washer 61 is interposed, the rotational torque is directly applied as friction force to the contact face between the base portion of the case 10 and the flange portion 51 of the shaft member 50, so that the contact face concerned is severely abraded. In this embodiment, the plastic washer 61 is inserted so as to be freely rotatable with respect to the shaft member 50, and the plastic washer 61 is freely rotatable with respect to the case 10, so that the rotational torque occurring when the hinge device 1 is opened/closed can be efficiently escaped.

Furthermore, the outer diameter of the plastic washer 61 is slightly smaller than the outer diameters of flange portion 51 and the case 10. Therefore, a groove is formed between the case 10 and the flange portion 51. When the hinge device 1 is mounted in the flip phone (folding type cellular phone) or the like, an appearance decorative cap (not shown) is covered on the flange portion 51 so that the flange portion 51 is not bared. In the hinge device of this embodiment, a pawl provided to the cap is hooked to the groove portion, thereby fixing the cap.

Next, the shaft member 50 inserted in the case 10 is inserted in the friction plate 62. An insertion hole 62a fitted to the first fixing portion 53 of the shaft member 50 is formed at the center position of the friction plate 62. That is, the friction plate 62 is engaged with the first fixing portion 53 when it is engagedly mounted on the shaft member 50, and it interlocks with the rotation of the shaft member 50.

A spring seat 63, the coil spring 60 and the sliding disc 20 are successively fitted to the second round bar portion 54 of the shaft member 50 in this order, and disposed in the cylinder of the case 10. The rotational disc 30 is fitted to the second fixing portion 55 of the shaft member to which the sliding disc 20 is fitted. The rotational disc 30 is fitted to the shaft member 50 so that the second projecting end face 32 is brought into contact with the first confronting end face 22 of the sliding disc. That is, the projecting cam portion 23 of the first confronting end face 22 and the recess cam portion 33 of the second confronting end face 32 are engagedly fitted onto the shaft member 50 under the state that they are engaged with each other.

Furthermore, the hook member 40 is fitted to the second fixing portion 55 of the shaft member 50. The second fixing portion 55 of the shaft member 50 are designed so that the rectangular insertion holes 31, 41 of the rotational disc 30 and the hook member 40 are engagedly fitted to the second fixing portion 55. Therefore, by opening/closing the cover 4 described later, the rotational disc 30 and the hook member 40 turns together with the shaft member 50.

Finally, a washer 64 is fitted to the narrow tip portion 56 of the shaft member 50. In the hinge device in which the fitting of the washer 64 has been completed, the dropout of the respective members can be prevented by caulking the terminal of the narrow tip portion 56 by a hammer or the like.

The method of preventing the dropout of the respective members is not limited to the caulking. For example, a method of providing a groove to the narrow tip portion 56 of the shaft member 50 and fitting a snap ring into the groove may be adopted.

The hinge device is completed by assembling the respective members according to the above procedure.

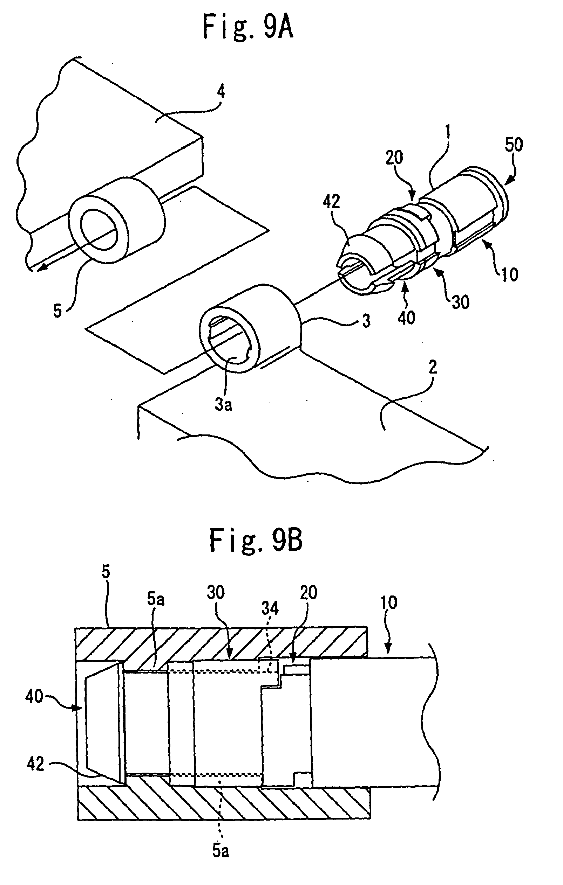

In the main body 2 of the folding device, a guide rail 3a is formed so as to extend on the inner peripheral surface of the insertion portion 3 as shown in Fig. 9A. The hinge device 1 is inserted into the insertion portion 3, and the groove portion 14 of the case 10 is fixedly fitted to the guide rail 3a. Under the fixed state, the hook member 40 and the rotational disc 30 of the hinge device 1 extend out from the insertion portion 3, and inserted in the insertion portion 5 of the cover 4. As shown in Fig. 9B, the insertion portion 5 of the cover 4 is provided with a guide rail 5a on the inner peripheral surface thereof as in the case of the insertion portion 3. With respect to the rotational disc 30, the groove portion 34 is fixedly fitted to the guide rail 5a of the insertion portion 5. Furthermore, with respect to the hinge device, the hook 42 of the hook member 40 is hooked to the end portion of the guide rail 5a. With the above construction, the main body 2 and the cover 4 are joined to each other by the hinge device 1. In the example of the figures, the main body 2 of the folding device and the case 10 of the hinge device are fitted to each other, and the cover 4 and each of the rotational disc 30 and the hook member 40 are fitted to each other. However, it is needless to say that the construction is inverted.

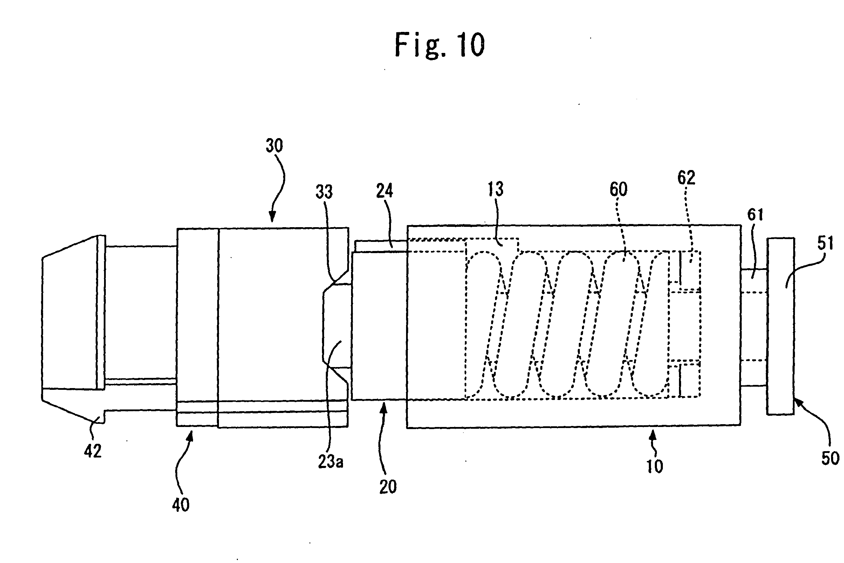

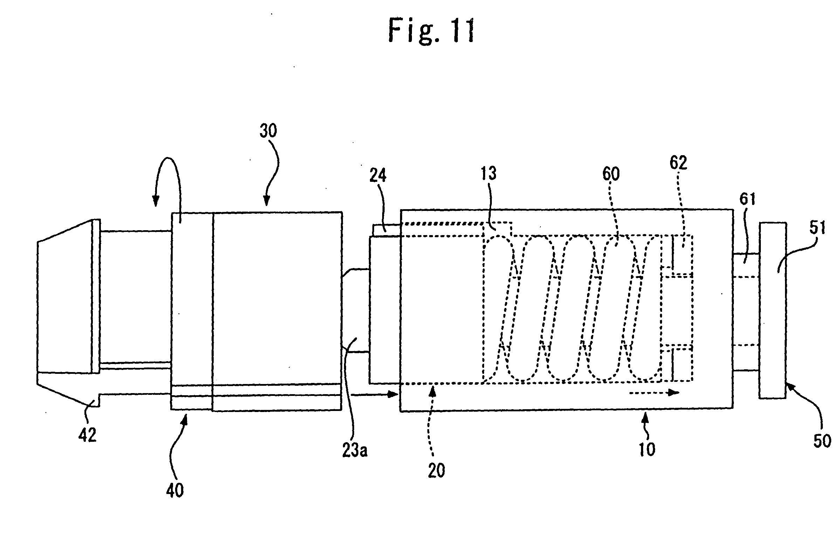

Fig. 10 is an enlarged side view showing the states of the sliding disc and the rotational disc before the hinge device is rotated, and Fig. 11 is an enlarged view showing the states of the sliding disc and the rotational disc during the rotation of the hinge device.

Next, the operation of the hinge device according to the first embodiment will be described mainly with reference to Fig. 10 and 11.

In the hinge device 1 as described above, the main body 2 and the cover 4 of the folding device are joined to each other so as to be freely opened and closed. Under the state that the main body 2 and the cover 4 of the folding device are closed, the recess cam portion 33 of the rotational disc 30 and the projecting cam portion 23 of the sliding disc 20 are engaged with each other as shown in Fig. 10.

In the example of Fig. 10, the projecting cam portion 23 and the recess cam portion 33 are perfectly engaged with each other, however, they may be constructed so as to be stationary at any position in accordance with the using style of the hinge device 1. For example, under the state that the tapered surface of the projecting cam portion 23 and the tapered surface of the recess cam portion 33 approach to each other and the projecting cam portion 23 does not perfectly fall down to the bottom portion of the recess cam portion 33, the stationary position may be set to the position under the state that a rotational torque is applied between the rotational disc 30 and the sliding disc 20 by the urging force of the coil spring 60.

According to such a construction, a cellular phone in which the cover 4 and the main body 2 of the folding device are freely opened and closed is set to a state that the projection cam portion 23 does not perfectly fall down to the bottom portion of the recess cam portion 33 under the state that the cover 4 is closed with respect to the main body 2. Accordingly, the rotational torque acts so as to close the cover 4, and thus the cover 4 can be tightly closed. On the other hand, the cellular phone is set to a state that the projecting cam portion 23 does not perfectly fall down to the bottomportion of the recess cam portion 33 under the state that the cover 4 is perfectly opened with respect to the main body 2, whereby the rotational torque can be made to act so as to open the cover 4 and thus the cover 4 is surely opened. At this time, the sliding disc 20 suffers press force from the coil spring 60 inserted in the case 10, and it is held to fix the rotation of the rotational disc 30.

When the cover 4 of the folding device is opened, the rotational disc 30 and the hookmember 40 are rotated in connection with the movement of the cover 4 in the opening direction. The rotational disc 30 and the hook member 40 are engaged with the second fixing portion 55 of the shaft member 50, and thus the shaft member 50 is simultaneously rotated.

When the rotation of the rotational disc 30 is started, the engagement between the recess camportion 33 and the projecting cam portion 23 of the sliding disc 20 is gradually displaced. As shown in Fig. 11, in connection with this displacement of the engagement, the recess cam portion 33 pushes the projecting cam portion 23 up along the tapered shape. That is, the rotation of the rotational disc 30 makes the sliding disc 20 slide to the case 10 side. Furthermore, the rotational disc 30 is further rotated, and the recess cam portion 33 and the projecting cam portion 23 are engaged with each other again at the position where the rotational disc 30 is rotated by 180° (the state that the cover 4 is opened by 180°). The coil spring 60 urges the projecting cam portion 23 when the recess cam portion 33 and the projecting cam portion 23 are engaged with each other again, and thus the projecting cam portion 23 positively falls down into the recess portion of the recess cam portion 33. The movement of the projecting cam portion 12 at this time brings a click sense and transferred to a user effectively.

Here, the rotational torque when the rotational disc 30 is rotated is transmitted to the sliding disc 20 in contact with the rotational disc 30. Accordingly, the rotating force acts on the sliding disc 20 by the rotational torque transmitted to the rotational disc 30. The rotational force acting on the sliding disc 20 makes the positioning projecting portion 24 provided on the outer peripheral surface positively abut against the positioning recess portion 13 of the case 10. That is, the positioning recess portion 13 of the case 10 abuts against the positioning projecting portion 24, thereby receiving the rotating force of the sliding disc 20.

Therefore, the positioning projecting portion 24 and the positioning recess portion 13 preferably extend to be long in the axial direction. By making the positioning projecting portion 24 and the positioning recess portion 13 extend to be long in the axial direction, the rotational torque can be more dispersed.

The arrangement of the positioning recess portion 13 and the positioning projecting portion 24 provided to the case 10 and the sliding disc 20 may be reversed. The positioning projecting portion may be provided to the case 10 while the positioning recess portion is provided to the sliding disc 20, and then these elements may be engaged with each other.

The outer peripheral surface of the sliding disc 20 is preferably designed in such shape and dimension that it can be engagedly fitted to the inner peripheral surface of the case 10 under fixed friction force. With this construction, constant friction force occurs by the surface contact between the sliding disc 20 and the case 10. Therefore, the rotational torque receiving the rotational disc 30 can be diffused to the contact portion between the inner peripheral surface of the case 10 and the outer peripheral surface of the sliding disc 20.

Furthermore, when the rotational disc 30 is stopped at some midpoint of the rotation thereof (under the state that the opening/closing motion of the cover 4 is stopped at some midpoint), the projecting cam portion 23 of the sliding disc 20 presses the second confronting end face 32 of the rotational disc 30 by the urging force of the coil spring 60. At this time, the friction plate 62 is pressed through the spring seat 63 by the coil spring 60 in the case 10. Therefore, the friction plate 62 functions as a brake for suppressing the rotation of the rotational disc 30 and the shaft member 50, and fix them at the stop position.

In order to satisfy the function of enabling the rotational disc 30 to be stopped even at some midpoint of the rotation thereof (the free stop function), a sufficient friction torque is required to obtained, and the coil sprint 60 is required to have spring force of about 40N.

However, if the hinge device is miniaturized, that is, the radius direction dimension of the sliding disc is short and also the spring force is strengthened, the abrasion of the sliding disc and the rotational disc 30 is intense.

Therefore, zirconia type ceramic (97 mol% of zirconia, 3 mol% of yttrium oxide) is used for the sliding disc 20, the rotational disc 30 as described above, and Vickers hardness of HV1200 to 1500 is implemented. However, if the hardness is increased, it is relatively brittle and the sliding disc 20 and the rotational disc 30 cannot endure the stress, so that they may get chipped. Therefore, the projecting cam portion 23 of the first confronting end face 22 and the second confronting end face 32 are subjected to barrel-polishing so that the surface roughness is set to 0.03 to 0.1µm, and further coated with lubricating agent to be smoothened so that the friction coefficient is set to 0.04 to 0.1. By reducing the friction coefficient between the projecting cam portion 23 of the first confronting end face 22 and the second confronting end face 32, the difficulty of slipping when use of the hinge device is started can be overcome, and the variation of the resistance at the time when the hinge device is opened/closed is not so remarkable even after it has been used at several ten thousands times from the start of the use. (The conventional hinge device has a problem that the friction coefficient between the confronting end faces is reduced as the hinge device is used and thus the movement at the opening/closing time of the hinge device is gradually smoother).

On the other hand, under the state that the rotational disc 30 is stopped at some midpoint of the rotation, that is, the projecting cam portion 23 of the sliding disc 20 runs on the second confronting end face 32 of the rotational disc 30, the spring force of the coil spring 60 is applied to the tip of the projecting cam portion 23. However, as described above, the frictional coefficients of the sliding disc 20 and the rotational disc 30 are small, and the area of the projecting cam portion 23 is small, so that it is difficult to obtain a frictional torque for implementing the free stop function described above.

Therefore, according to the hinge device of the first embodiment, the friction torque between the projecting cam portion 23 of the sliding disc 20 and the second confronting end face 32 of the rotational disc 30 is complemented by the frictional torque based on the surface contact between the outer peripheral surface of the sliding disc 20 and the inner peripheral surface of the case 10 and the frictional torque between the bottom surface inside the case 10 and the friction plate 62, thereby implementing the free stop function.

Furthermore, the friction plate 62 is a sliding part, and thus it is necessary to lubricate the friction plate 62. However, this embodiment is designed so that the friction plate 62 is inserted into the case 10 and thus there is no risk that lubricating oil supplied to the friction plate 62 leaks or seeps from the case 10 to the outside.

As described above, according to the hinge device of the first embodiment, the rotational torque of the rotational disc 30 is received by the projecting cam 23 provided to the confronting end face 22 of the sliding disc 20. The projecting cam 23 extends so as to project radially as described above, and the rotational radius corresponding to the contact portion thereof with the recess cam 33 of the rotational disc 30 can be increased. Therefore, in the rotation of the rotational disc 30, a rotational torque which is as large as possible can be generated by the urging force of the coil spring 60 and the tapered surfaces of the recess cam portion 33 of the rotational disc 30 and the projecting cam portion 23 of the sliding disc 20.

### [Second Embodiment]

Next, a second embodiment of the present invention will be described in detail with reference to the drawings.

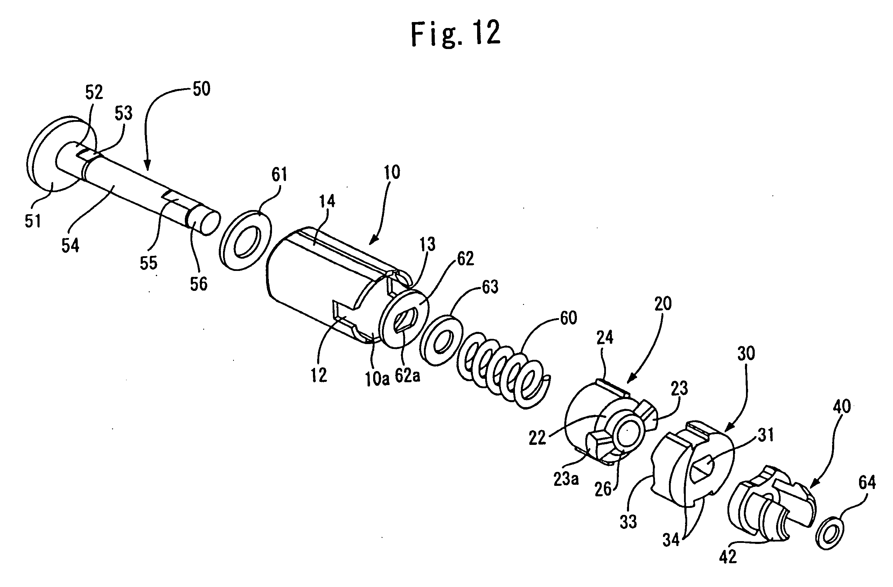

Figs. 12 to 16 are diagrams showing a hinge device according to a second embodiment of the presents invention, and Fig. 12 is an exploded perspective view showing the overall construction of the hinge device according to the second embodiment.

As in the case of the hinge device of the first embodiment, the hinge device according to the second embodiment links to a folding device as shown in Fig. 1 so that the folding device can be opened and closed. In the hinge device of this embodiment, the same parts as or corresponding parts to the hinge device according to the first embodiment are represented by the same reference numerals, and the detailed description thereof is omitted.

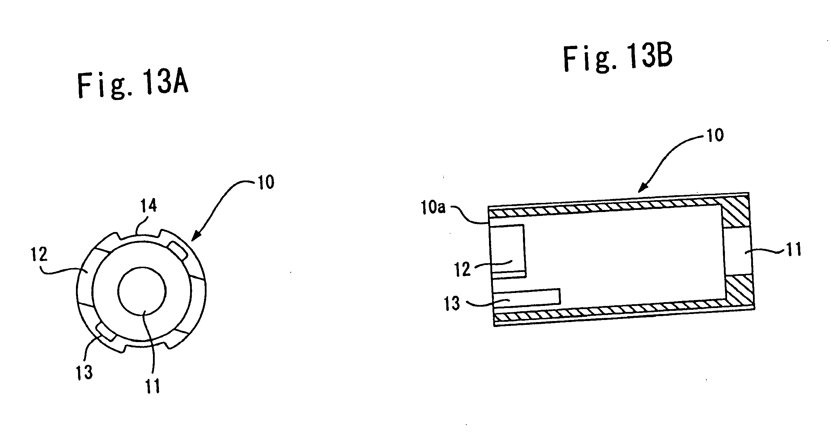

As shown in Figs. 12, 13A, 13B, the case 10 of the second embodiment is provided with a clearance groove 12 which is cut out on the peripheral surface of the case 10 so as to extend from the opening portion 10a to a predetermined position along the axial direction.

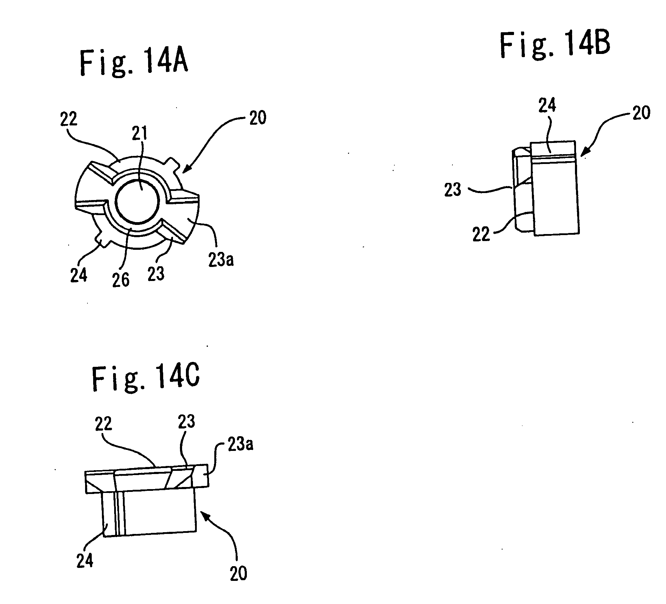

Furthermore, as shown in Figs. 12, 14A, 14B, 14C, the projecting cam portion 23 of the sliding disc 20 extends radially so as to be symmetrical in the right-and-left direction with respect to the central axial position, and the end portion thereof projects from the side peripheral surface of the sliding disc 20. The projecting portion 23a of the projecting cam portion 23 slides in the clearance groove 12 of the case 10.

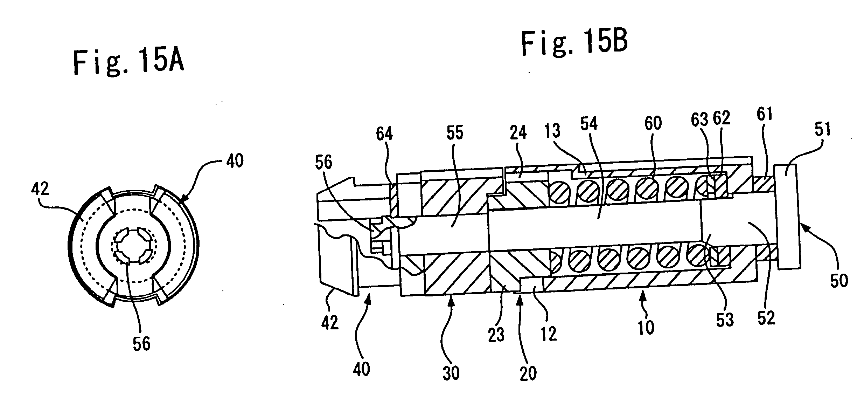

Fig. 15A is a front view showing the overall construction of the hinge device, and Fig. 15B is a side cross-sectional view showing the overall construction of the hinge device.

Next, the details structure of the hinge device 1 according to the second embodiment and the method of assembling the respective constituent elements will be described mainly with reference to Fig. 12, 15A and 15B.

The spring seat 63, the coil spring 60 and the sliding disc 20 are successively inserted into the second roundbar portion 54 of the shaft member 50 in this order, and arranged in the cylinder of the case 10. At this time, the sliding disc 20 is inserted so that the positioning projecting portion 24 is fitted in the positioning recess portion 13 of the case 10 and the projecting portion 23a of the projecting cam portion 23 is fitted in the clearance groove 12 of the case 10. With respect to the shaft member 50 inserted in the case 10 and the sliding disc 20, the second fixing portion 55 thereof is further inserted in the rotational disc 30.

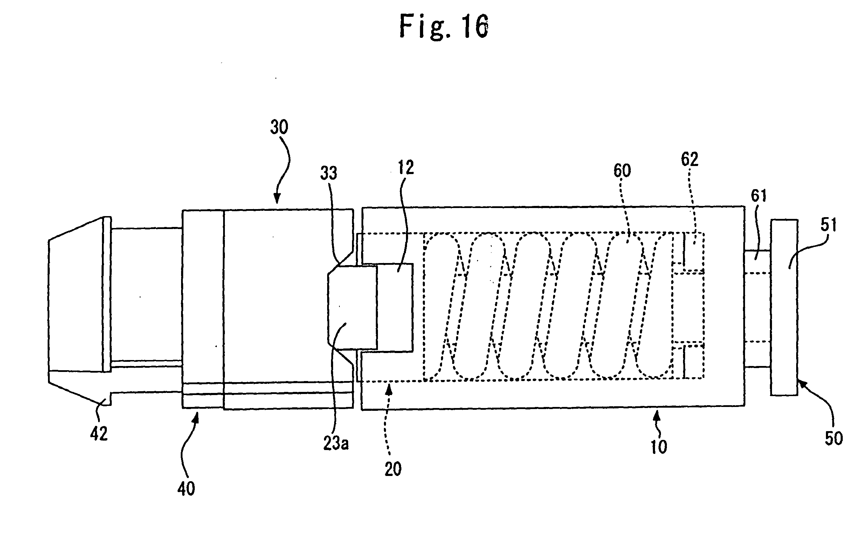

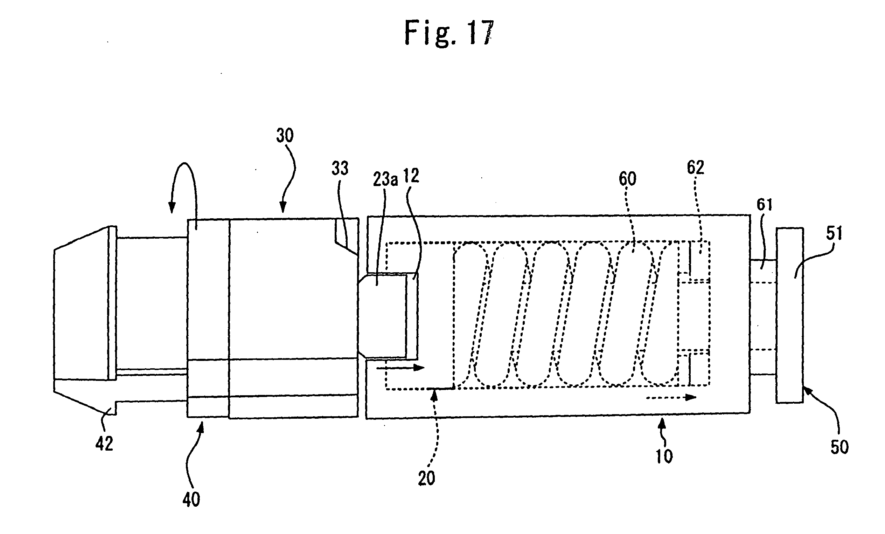

Fig. 16 is an enlarged side view showing the state of the sliding disc and the rotational disc before the hinge device is rotated, and Fig. 17 is an enlarged side view showing the state of the sliding disc and the rotational disc during the rotation of the hinge device.

Next, the operation of the hinge device according to the second embodiment will be described mainly with reference to Figs. 16 and 17.

The hinge device 1 as described above links the main body 2 and the cover 4 of the folding device so that the main body 2 and the cover 4 are freely opened and closed. Under the state that the main body 2 and the cover 4 of the folding device are closed, the recess cam portion 33 of the rotational disc 30 and the projecting cam portion 23 of the sliding disc 20 are engaged with each other as shown in Fig. 16.

When the cover 4 of the folding device is opened, the rotational disc 30 and the hook member 40 are rotated in connection with the motion of the cover 4 in the opening direction. The rotational disc 30 and the hook member 40 are engaged with the second fixing portion 55 of the shaft member 50, and thus the shaft member 50 is rotated at the same time.

When the rotation of the rotational disc 30 is started, the engagement between the recess camportion 33 and the projecting cam portion 23 of the sliding disc 20 is gradually displaced. As shown in Fig. 17, this displacement makes the recess cam portion 33 push up the projecting cam portion 23 along the tapered shape. That is, the rotation of the rotational disc 30 makes the sliding disc 20 slide to the case 10 side. At this time, in the sliding disc 20, the projecting portion 23a of the projecting cam 23 slides on the clearance groove 12 of the case 10. Furthermore the rotational disc 30 is further rotated and the recess cam portion 33 and the projecting cam portion 23 are engaged with each other again at the position where the rotational disc 30 is rotated by 180° (under the state that the cover 4 is opened by 180°). When the recess cam portion 33 and the projecting cam portion 23 are engaged with each other again, the projecting cam portion 23 positively falls down into the recess portion of the recess cam portion 33 because the coil spring 60 urges it. The motion of the projecting cam portion 23 at this time brings a click sense and it is effectively transferred to the user.

According to the hinge device of the second embodiment, the projecting portion 23a of the sliding disc 20 intrudes into the clearance groove 12 of the case 10, so that the dimension in the axial direction can be shortened and thus the miniaturization of the device can be implemented.

The hinge device of the present invention is not limited to the above embodiments, and various applications or modifications may be made as occasion demands. For example, in the hinge device 1 of the above embodiments, the projecting cam portion 23 and the recess cam portion 33 are engaged with each other by rotating the rotational disc 30 by 180°, however, they may be engaged with each other at any rotational position. Furthermore, various shapes may be adopted as the shapes of the projecting cam portion 23 and the recess cam portion 33 in accordance with the purpose such as the rotational position or the like.

### Industrial Applicability

As described above, according to the present invention, the durability of the case and the sliding disc to the rotational torque occurring in connection with the rotational operation can be drastically enhanced.

## Claims

1. A hinge device containing a case, a coil spring, a sliding disc and a rotational disc, wherein:
the case has an positioning recess portion or projecting portion on the inner wall thereof;
the coil spring is engagedly fitted in the case;
the sliding disc has such a peripheral surface shape that the sliding disc is engagedly fitted to the inner wall of the case, and is urged by the coil spring so as to be slidable in an axial line direction in the case;
the sliding disc has a projecting portion or recess portion that is provided on the peripheral surface thereof and engaged with the positioning recess portion or projecting portion formed on the inner wall of the case to thereby suppress the rotation thereof with respect to the case;
the rotational disc is rotatable with respect to the sliding disc and the case;
the sliding disc and the rotational disc are provided with cam portions that are engaged with or separated from each other in connection with the rotation of the rotational disc;
the cam portion formed on the sliding disc is formed so as to project to the outside of the outer peripheral surface of the sliding disc; and
the cam portion formed on the rotational disc has a length in the radial direction that corresponds to the cam portion formed on the sliding disc.

2. A hinge device containing a case, a friction plate, a coil spring, a sliding disc, a rotational disc and a shaft member penetrating through these elements, wherein:
the case is designed in a cylindrical shape having a bottom, has a positioning recess portion or projecting portion on the inner wall thereof, and provided with a through hole in the bottom of the case so that the shaft member is rotatably inserted through the through hole;
the friction plate is fixed to the shaft member so as to interlock with the rotation of the shaft member and provided so as to come into contact with the bottom surface inside the case so that friction occurs between the friction plate and the bottom surface inside the case in connection with the rotation of the shaft member;
the coil spring is engagedly fitted in the case and presses the friction plate so that the friction plate is brought into contact with the bottom surface inside the case under pressure;
the sliding disc is provided with an insertion hole substantially at the center position so that the shaft member is rotatably inserted through the insertion hole, has such a peripheral shape that the sliding disc can be engagedly fitted to the inner wall of the case, and is urged by the coil spring so as to be slidable in an axial line direction in the case;
the sliding disc has a projecting portion or recess portion that is provided on the peripheral surface thereof and engaged with the positioning recess portion or projecting portion formed on the inner wall of the case to thereby suppress the rotation thereof with respect to the case;
the rotational disc is fixed to the shaft member so as to interlock with the rotation of the shaft member, and rotatable with respect to the sliding disc and the case;
the sliding disc and the rotational disc are provided with cam portions that are engaged with or separated from each other in connection with the rotation of the rotational disc;
the cam portion formed on the sliding disc is formed so as to project to the outside of the outer peripheral surface of the sliding disc; and
the cam portion formed on the rotational disc has a length in the radial direction that corresponds to the cam portion formed on the sliding disc.

3. The hinge device according to claim 2, wherein the shaft member is provided with a flange portion at one end of the case bottom surface side thereof, and a plastic washer interlocking with the rotation of the shaft member is inserted between the flange portion and the case bottom surface.

4. The hinge device according to claim 2, wherein the cam portion of the sliding disc is a projecting cam having a tapered shape formed on a confronting end face of the sliding disc which faces the rotational disc, and a ring-shaped portion having the same height as the projecting cam is provided at the peripheral edge of the confronting end face side at the through hole of the sliding disc.

5. The hinge device according to claim 1, wherein the case has a clearance groove cut out along the axial line direction from a side end edge thereof, and a portion of the cam portion formed on the sliding disc, which projects to the outside of the outer peripheral surface of the sliding disc, intrudes into the clearance groove.

6. The hinge device according to claim 1, wherein the cam portion of the sliding disc is formed on a confronting end face of the sliding disc which faces the rotational disc, and the inner wall of the case and the outer peripheral surface of the sliding disc which faces the inner wall concerned are engagedly fitted to each other so that the inner wall and the outer peripheral surface can be brought into frictional contact with each other.

7. The hinge device according to claim 1, wherein the camportions formed on the sliding disc and the rotational disc are designed so that the Vickers hardness of confronting cam faces thereof is set to HV1200 to 1500, the surface roughness thereof is set to 0.03 to 0.1µm and the frictional coefficient is set to 0.04 to 0.1.

8. The hinge device according to claim 7, wherein the camportions formed on the sliding disc and the rotational disc are formed of zirconia type ceramic material.
